# EUROPÄISCHE PATENTANMELDUNG

(11) **EP 4 328 155 A2**
(43) Veröffentlichungstag der Anmeldung: **28.02.2024**
(21) Anmeldenummer: 23164352.9
(22) Anmeldetag: 27.03.2023
(51) Int. Cl.: B65G 1/137, B65G 1/04

(54) **LAGER- UND ENTNAHMESYSTEM, ARBEITSPLATZ, BEHÄLTER UND VERFAHREN FÜR EIN LAGER- UND ENTNAHMESYSTEM**

(30) Priorität: 05.07.2022 DE 102022206857
(71) Anmelder: Gebhardt Fördertechnik GmbH, D-74889 Sinsheim (DE)
(72) Erfinder: Gebhardt, Marco, 74889 Sinsheim (DE); Knoop, Alexander, 74889 Sinsheim (DE)
(74) Vertreter: Ullrich & Naumann PartG mbB

(57) **Zusammenfassung**

Im Hinblick auf einen flexiblen Betrieb mit konstruktiv einfachen Mitteln ist ein Lager- und Entnahmesystem (32) für Behälter (1) angegeben, umfassend:
eine Gitterstruktur (34) mit einer Vielzahl von Gitterzellen, wobei jede Gitterzelle eine Lagersäule (35) einer unterhalb der Gitterstruktur (3) angeordneten Behälter-Lagerstruktur definiert, wobei die Lagersäulen (35) eingerichtet sind, jeweils einen vertikalen Stapel von Behältern (4) aufzunehmen, und wobei die Gitterstruktur (34) Längstransportwege in einer Längsrichtung (2) und Quertransportwege in einer Querrichtung (5) definiert, und
mindestens ein zum Fahren entlang der Längstransportwege und/oder Quertransportwege ausgebildetes Transportfahrzeug (25) für Behälter (1).

Das Lager- und Entnahmesystem (32) ist derart ausgestaltet und weitergebildet, dass mindestens ein Behälter (1) mindestens einen Träger (4) zum Einhängen von Hängeware aufweist.

Ein Arbeitsplatz (37) und ein Behälter (1) sind entsprechend ausgestaltet. Ein Verfahren zum Betreiben ist angegeben.

## Beschreibung

Die Erfindung betrifft ein Lager- und Entnahmesystem für Behälter, umfassend:
eine Gitterstruktur mit einer Vielzahl von Gitterzellen, wobei jede Gitterzelle eine Lagersäule einer unterhalb der Gitterstruktur angeordneten Behälter-Lagerstruktur definiert, wobei die Lagersäulen eingerichtet sind, jeweils einen vertikalen Stapel von Behältern aufzunehmen, und wobei die Gitterstruktur Längstransportwege in einer Längsrichtung und Quertransportwege in einer Querrichtung definiert, mindestens ein zum Fahren entlang der Längstransportwege und/oder Quertransportwege ausgebildetes Transportfahrzeug für Behälter.

Des Weiteren betrifft die vorliegende Erfindung einen Arbeitsplatz für ein Lager- und Entnahmesystem und einen Behälter für ein Lager- und Entnahmesystem.

Schließlich betrifft die vorliegende Erfindung ein Verfahren zum Betreiben eines Lager- und Entnahmesystems oder eines Arbeitsplatzes.

Lager- und Entnahmesysteme der eingangs genannten Art sind aus der Praxis bekannt und existieren in unterschiedlichen Ausführungsformen. Die WO 2020/094604 A1 und die WO 2021/165030 A1 zeigen beispielhafte Ausführungsformen von Lager- und Entnahmesystemen für Behälter.

Ganz grundsätzlich bezieht sich die Erfindung auf das Handling/die Handhabung von Hängeware in Lager- und Entnahmesystemen. Hängewaren sind Waren, die bevorzugt hängend transportiert und gelagert werden sollen, beispielsweise im Mode- oder Fashionbereich. Kleidung ist jedoch nur ein mögliches Beispiel für Hängewaren. Viele dieser Hängewaren sollen oder können nicht gefaltet oder zusammengelegt werden, um in einen Standardlagerbehälter zu passen, und können deshalb nicht in einem automatischen Blocklager gelagert werden.

Der vorliegenden Erfindung liegt nunmehr die Aufgabe zugrunde, ein Lager- und Entnahmesystem, einen Arbeitsplatz für ein Lager- und Entnahmesystem, einen Behälter für ein Lager- und Entnahmesystem sowie ein Verfahren zum Betreiben eines Lager- und Entnahmesystems oder eines Arbeitsplatzes anzugeben, wonach ein flexiblerer Betrieb mit konstruktiv einfachen Mitteln ermöglicht ist.

Erfindungsgemäß wird die voranstehende Aufgabe durch ein Lager- und Entnahmesystem mit den Merkmalen des Anspruchs 1, durch einen Arbeitsplatz mit den Merkmalen des Anspruchs 6, durch einen Behälter mit den Merkmalen des Anspruchs 11, sowie durch ein Verfahren mit den Merkmalen des Anspruchs 12 gelöst.

Danach ist das Lager- und Entnahmesystem gemäß Anspruch 1 dadurch gekennzeichnet, dass mindestens ein Behälter mindestens einen Träger zum Einhängen von Hängeware aufweist.

Anspruch 6 beansprucht den Arbeitsplatz dieses Lager- und Entnahmesystems. Anspruch 11 beansprucht den Behälter dieses Lager- und Entnahmesystems. Schließlich ist das Verfahren zum Betreiben eines Lager- und Entnahmesystems, Arbeitsplatzes oder Behälters gemäß Anspruch 12 dadurch gekennzeichnet, dass Hängeware in mindestens einen Träger eines Behälters zur Lagerung eingehängt und/oder zur Entnahme ausgehängt wird.

In erfindungsgemäßer Weise ist zunächst erkannt worden, dass durch geschickte Ausgestaltung mindestens eines Behälters die voranstehende Aufgabe auf überraschend einfache Weise gelöst wird. In weiter erfindungsgemäßer Weise weist hierbei im Konkreten mindestens ein Behälter mindestens einen in Längs- und/oder Querrichtung verlaufenden Träger zum Einhängen von Hängeware auf. Somit kann Hängeware auch in einem automatischen Blocklager hängend gelagert werden und muss nicht länger gefaltet oder zusammengelegt werden, um ein einem Behälter aufbewahrt werden zu können. Hierdurch werden bei dem erfindungsgemäßen Lager- und Entnahmesystem eine erhöhte Flexibilität realisiert, da unterschiedliche Behälter mit unterschiedlichen Warengattungen - Hängeware oder andere Ware - bestückt und gehandhabt werden können. In diesem Zusammenhang ist in diesem Dokument mit dem Begriff "Behälter" jegliches Behältnis oder jegliche Aufnahmeeinrichtung umfasst, das oder die zum Lagern und/oder Transportieren von geeignetem Fördergut geeignet ist. Sofern mindestens einer der Behälter für das Lager- und Entnahmesystem mindestens einen in Längs- und/oder Querrichtung verlaufenden Träger zum Einhängen von Hängeware aufweist, eignet sich das Lager- und Entnahmesystem auch für Hängeware.

Folglich sind mit dem erfindungsgemäßen Lager- und Entnahmesystem, dem erfindungsgemäßen Arbeitsplatz und dem erfindungsgemäßen Verfahren ein Lager- und Entnahmesystem, ein Arbeitsplatz, ein Behälter und ein Verfahren bereitgestellt, wonach ein flexiblerer Betrieb mit konstruktiv einfachen Mitteln ermöglicht ist.

Im Hinblick auf eine besonders einfache und günstige Herstellbarkeit kann der Träger zum Einhängen von Hängeware als Kleiderstange ausgebildet sein. Hierdurch können bestehende Behälter umgerüstet werden. Der Träger kann eingesteckt, verschweißt, verschraubt oder auf sonstige bekannte Weise lösbar oder dauerhaft in den Behälter eingebracht werden. Der Träger kann einstückig mit dem Behälter ausgebildet sein.

Um die Handhabbarkeit von eingehängter Hängeware zu verbessern, kann die Kleiderstange in Segmente unterteilt sein. Die Unterteilung der Kleiderstange in Segmente verhindert die einseitige Beladung sowie ein Verrutschen der Hängeware. Die Behälter sind palettierbar und können im Prinzip bis zur Filiale genutzt werden, das heißt die Behälter können auf Paletten und/oder in Rollwägen usw. in vorteilhafter Weise zu weiter transportierbaren Einheiten (z.B. mit dem LKW) zusammengefasst werden.

Dabei kann der Träger in jedweder Richtung und/oder Orientierung relativ zu dem Behälter oder zu der Gitterstruktur verlaufen bzw. ausgerichtet sein. Vorzugsweise kann der Träger innerhalb des Behälters angeordnet sein und bei eingelagertem Behälter im Wesentlichen in Längs- und/oder Querrichtung der Gitterstruktur verlaufen. Im Hinblick auf eine besonders einfache Konstruktion und/oder Bauweise des Behälters kann der Behälter Querstreben aufweisen, zwischen denen der Träger in Längsrichtung verläuft. Ebenso kann der Behälter Längsstreben aufweist, zwischen denen der Träger in Querrichtung verläuft. Die Längsrichtung und die Querrichtung des Behälters entsprechen dabei der Längsrichtung und der Querrichtung der Gitterstruktur des Lager- und Entnahmesystems. In Bezug auf die hier beschriebenen Gegenstände können Längs- und Querrichtung auch vertauscht werden.

Um eine hinreichende Festigkeit bei möglichst leichter Bauweise zu gewährleisten, kann der Träger allein und/oder der gesamte Behälter vorzugsweise aus Metall - beispielsweise aus Stahl oder Aluminium - hergestellt sein. Auch eine Konstruktion aus Kunststoff oder Faserverbundwerksstoffen bietet sich an. Dabei kann der Träger aus demselben Material wie der restliche Behälter oder auch aus einem anderen Material hergestellt sein.

Hinsichtlich einer vorteilhaften Konstruktion eines Behälters mit einem Träger zum Einhängen von Hängeware kann der Behälter ein Gestell aufweisen, welches an seiner Oberseite einen oberen Rahmen aufweist. Der obere Rahmen kann vorzugsweise der Handhabungsaussparungen für einen Greifer des Transportfahrzeugs aufweisen. Hierdurch wird auch die Flexibilität des gesamten Lager- und Entnahmesystems weiter gesteigert, weil der gleiche Greifer und/oder das gleiche Transportfahrzeug genutzt werden können, wie zur Handhabung und zum Transport vorbekannter Behälter. Damit die Behälter gestapelt werden können, kann das Gestell vorzugsweise auch einen unteren Rahmen aufweisen. Oberer und unterer Rahmen können durch Vertikalstützträger verbunden sein, um das Gestell des Behälters zu bilden. Im Bereich des oberen Rahmens können dann Querstreben oder Längsstreben vorgesehen sein, zwischen denen der Träger in Längsrichtung oder in Querrichtung verläuft. Der Träger ermöglicht das Aufhängen von Hängeware. Vorzugsweise kann der Träger in Quer und/oder Längsrichtung mittig angeordnet sein.

Um den Betrieb des Lager- und Entnahmesystems noch flexibler zu gestalten, können die Gestelle unterschiedliche Höhen aufweisen. Die Höhen können der Länge der jeweils verwendeten Vertikalstützträger entsprechen und können in Abhängigkeit von der Länge der zu lagernden Hängeware (T-Shirts, Latzhosen, Sakkos, Abendkleider, ...) gewählt werden, wobei je nach Art der Hängeware und vorgesehener Handhabung bei der Wahl der Höhe des Behälters zusätzlich zur Länge der Hängeware ein angemessener Puffer berücksichtigt werden kann.

Je nach Länge und/oder Breite der zu lagernden Hängewaren können Behälter auch mehrere Träger neben- und/oder übereinander aufweisen. Bei einem Behälter können beispielsweise im Bereich des oberen Rahmens obere Querstreben vorgesehen sein, zwischen denen ein oberer Träger in Längsrichtung verläuft. Bei Behältern mit großer Erstreckung in Querrichtung oder zur Lagerung von schmaler Hängeware können auch zwei oder mehr obere Träger zwischen den oberen Querstreben verlaufen. Zusätzlich können in einem von der Länge der zu lagernden Hängeware - zuzüglich etwaigem Puffer - abhängigen Abstand unterhalb der oberen Querstreben untere Querstreben vorgesehen sein, zwischen denen ein oder mehrere untere Träger in Längsrichtung verlaufen. Anstelle der unteren Querstreben können auch Längsstreben vorgesehen sein, zwischen denen untere Träger dann in Querrichtung verlaufen. Unterhalb des unteren Trägers sollte die zu lagernde Hängeware noch in den Behälter passen. Deshalb wäre die Höhe des hier beispielhaft beschriebenen Behälters so zu wählen, dass sich der Behälter noch um die Länge der zu lagernden Hängeware - zuzüglich etwaigem Puffer - unterhalb des unteren Trägers erstreckt. Behälter können auch weitere Ebenen mit weiteren Querstreben aufweisen, zwischen denen der Träger in Längsrichtung verläuft. Ebenso kann der Behälter weitere Ebenen mit Längsstreben aufweisen, zwischen denen der Träger in Querrichtung verläuft. Mit anderen Worten können in Abhängigkeit der Abmessungen des Behälters und der zu lagernden Hängeware mehrere Träger über- und/oder nebeneinander in dem Behälter vorgesehen sein.

Die maximale Höhe eines Behälters ist einerseits durch die Höhe der Lagersäulen des Lager- und Entnahmesystems begrenzt. Andererseits ergibt sich bei der Verwendung von hohen oder sehr hohen Behältern ein entsprechend hohes Transportfahrzeug, dessen Fahrt und Bewegungen geregelt werden müssen, damit das Transportfahrzeug nicht in Schwingung gerät. Vorteilhaft ist dabei grundsätzlich ein niedriger Schwerpunkt des Transportfahrzeugs, also die Anordnung schwerer Komponenten unten im Fahrzeug. Ansätze zur Schwingungsvermeidung sind beispielsweise in der Patentschrift EP 3 115 331 B1 der Anmelderin beschrieben. Hier wird eine passive Schwingungsreduktion durch eine gezielte Drehzahl-Sollwertvorgabe für das Transportfahrzeug/den Roboter bzw. den Antrieb eines Regalbediengerätes ermöglicht.

Im Hinblick auf einen besonders sicheren Betrieb des Lager- und Entnahmesystems kann ein Behälter zumindest teilweise verschließbar ausgebildet sein. Ganz grundsätzlich bedeutet bei allen hier beschriebenen Ausführungsbeispielen ein zumindest teilweises Verschließen, dass ein Verschließen auch in vollem Umfang möglich ist. Eine optional nach oben oder unten orientierte, vorzugsweise seitliche Öffnung des Behälters kann also auch vollständig verschlossen werden. Es können eine obere, eine untere und/oder bis zu alle vier seitlichen Wände verschließbar ausgebildet sein. Von besonderer Bedeutung sind hierbei seitliche Öffnungen des Behälters, die nicht bereits durch entsprechend angeordnete Längs- und/oder Querstreben begrenzt sind. Das seitliche Verschließen hat den Vorteil, dass die eingehängte Hängeware sich beim Transport des Behälters nicht in der Gitterstruktur des Lager- und Entnahmesystems verfängt. Eine entsprechende Abtrennung zum seitlichen Verschließen eines Behälters kann aus verschiedenen Materialien und auf verschiedene bekannte Weise gefertigt sein. Beispielhaft genannt seien hier Textil mit Reißverschluss, Gummibänder und Vorhänge. Alternativ oder zusätzlich kann auch eine stabile Verbindung des Rahmens geschaffen werden, um ein Ausbauchen der Hängeware zu vermeiden. Die beschriebenen insbesondere zwischen den Vertikalstützträgern angeordneten Längs- und/oder Querstreben zur Befestigung des Trägers sind hierbei lediglich eine Möglichkeit zur Begrenzung bzw. zum teilweisen Verschließen der seitlichen Öffnungen des Behälters. Auch diagonal verlaufende Streben oder andere Gestaltungen des Rahmens können genutzt werden, um den Behälter seitlich abzutrennen.

Im Hinblick auf eine besonders bedienerfreundliche Handhabung von Hängeware mit dem beschriebenen Lager- und Entnahmesystem kann ein entsprechend eingerichteter Arbeitsplatz vorgesehen sein. Der beschriebene Arbeitsplatz kann im Sinne einer Arbeitsstation des Lager- und Entnahmesystems für Bedienpersonal realisiert sein, wobei mehrere Arbeitsplätze oder Arbeitsstationen an oder in einer Gitterstruktur des Lager- und Entnahmesystems realisiert sein können. Der Arbeitsplatz kann einen vertikalen Schacht aufweisen. Vorzugsweise kann ein Behälter mittels eines dem Transportfahrzeug oder der Gitterstruktur zugeordneten Greifers entlang dem Schacht von dem Transportfahrzeug kommend in Richtung einer Zugangsöffnung im Schacht oder entgegengesetzt in Richtung Transportfahrzeug bewegt werden. Ein im Schacht befindlicher Behälter kann durch die Zugangsöffnung zugänglich gemacht werden, insbesondere wenn der Behälter sich im Schacht in einer Lager- und Entnahmeposition befindet. Somit sind die Behälter in einem automatischen Blocklager durch das Transportfahrzeug bis zum Arbeitsplatz transportierbar, und das Bedienpersonal kann komfortabel und effizient auf die darin befindliche Hängeware zugreifen.

Der Arbeitsplatz kann nicht nur im Zusammenhang mit den hier beschriebenen Behältern verwendet werden, die mindestens einen Träger zum Einhängen von Hängeware aufweisen. Im Hinblick auf einen besonders flexiblen Betrieb des Lager- und Entnahmesystems kann der Arbeitsplatz zusätzlich oder alternativ auch für Standard-Behälter nach dem Stand der Technik verwendet werden, die keinen Träger zum Einhängen von Hängeware aufweisen. Somit können an ein und demselben Arbeitsplatz sowohl Standard-Behälter ohne Träger zum Einhängen von Hängeware als auch die hier beschriebenen Behälter mit mindestens einem Träger zum Einhängen von Hängeware dem Bedienpersonal zugänglich gemacht und auf sichere Weise bedient werden. Ebenso kann vorgesehen sein, dass ein Arbeitsplatz ausschließlich für die Zugänglichmachung und Bedienung von Standard-Behältern ohne Träger zum Einhängen von Hängeware oder ausschließlich für die Zugänglichmachung und Bedienung der hier beschriebenen Behälter mit mindestens einem Träger zum Einhängen von Hängeware ausgebildet ist.

Im Hinblick auf eine erhöhte Sicherheit für das Bedienpersonal kann die Zugangsöffnung mit einer Abdeckung verschließbar sein. Beispielsweise kann es sich bei der Abdeckung um ein Rolltor oder um ein mehrgliedriges Rolladenprofil handeln. Insbesondere während in dem Schacht der jeweiligen Lagersäule Behälter vom Arbeitsplatz weg oder zum Arbeitsplatz hin transportiert werden, ist das Verletzungsrisiko für das Bedienpersonal reduziert, wenn die Zugangsöffnung mit der Abdeckung verschlossen ist.

Bevorzugt verschließt die Abdeckung in einer geschlossenen Position die Zugangsöffnung und gibt die Zugangsöffnung in einer geöffneten Position frei. Vorzugsweise kann die Abdeckung nur dann in die geöffnete Position gebracht werden, wenn der Schacht leer ist oder wenn ein Behälter sich im Schacht oder in der diesem Schacht zugeordneten Lagersäule in einer Lager- und Entnahmeposition befindet. Finden Transportvorgänge der Behälter im Schacht oder in der Lagersäule statt, sollte die Abdeckung sich zum Schutze des Bedienpersonals in der geschlossenen Position befinden.

Um eine besonders hohe Sicherheit für das Bedienpersonal zu gewährleisten, kann die Abdeckung in der geöffneten Position den Schacht zum Transportfahrzeug hin verschließen. Vorzugsweise kann sich das Transportfahrzeug dabei oben auf der Gitterstrutkur befinden, so dass die Abdeckung in der geöffneten Position den Schacht nach oben zum Transportfahrzeug hin verschließt. Denkbar ist aber auch, dass die Abdeckung den Schacht zu einer Seite hin verschließt, beispielsweise, um einen Greifer eines Transportfahrzeugs abzuschirmen, der sich in einem benachbarten und/oder in einem seitlich neben dem zu verschließenden Schacht gebildeten weiteren Schacht befindet und in diesem weiteren Schacht Behälter handhabt. Das ist beispielsweise möglich, wenn die Abdeckung als Rolltor oder als mehrgliedriges Rolladenprofil ausgebildet ist, und die Abdeckung beim Übergang von der geschlossenen in die geöffnete Position nicht um eine Welle herum aufgerollt wird, sondern in Führungen verläuft, die im Bereich der Zugangsöffnung zwar vertikal verlaufen und die Abdeckung vertikal führen, aber oberhalb der Zugangsöffnung in die Horizontale übergehen und die Abdeckung horizontal führen, so dass die Abdeckung quer zum vertikalen Schacht in horizontaler Richtung verläuft und der Schacht zum Transportfahrzug hin verschlossen wird.

Befindet sich die Abdeckung in der geöffneten Position, so erhält das Bedienpersonal Zugriff auf die Hängeware. Gleichzeitig wird der Zugriff durch das Transportfahrzeug abgetrennt. Selbst wenn nun während der Handhabung von Hängeware durch das Bedienpersonal ein Transportfahrzeug von oben einen Behälter in die Lagersäule einbringen sollte, würde der Behälter durch die Abdeckung aufgehalten und könnte das Bedienpersonal nicht verletzen. Wird die Abdeckung in die geschlossene Position gebracht damit der Zugriff des Bedienpersonals auf die Hängeware ausgeschlossen, kann umgekehrt das Transportfahrzeug ungestört arbeiten.

Alternativ ist eine Absicherung auch mit Lichtgittern möglich, die bei gleichzeitigem Eingriff von Transportfahrzeug und Bedienpersonal in den Schacht eines Arbeitsplatzes sofort ein Not-Halt-Signal auslösen. Dies kann allerdings insbesondere bei Lager- und Entnahmesystemen mit vielen Transportfahrzeugen und/oder bei Not-Halt-Signalübertragung per WLAN problematisch sein.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele des erfindungsgemäßen Lager- und Entnahmesystems, des Arbeitsplatzes und des Behälters sowie des Verfahrens anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung eine erste Ausführungsform eines Behälters, der einen in Querrichtung verlaufenden Träger zum Einhängen von Hängeware aufweist,
- Fig. 2: in einer Draufsicht von oben auf den Behälter aus Fig. 1,
- Fig. 3: in einer Draufsicht von oben auf eine zweite Ausführungsform eines Behälters, dessen Träger in Segmente unterteilt ist,
- Fig. 4: in einer perspektivischen Darstellung ein Transportfahrzeug für Behälter, das den Behälter aus Fig. 1 transportiert,
- Fig. 5: in einer perspektivischen Darstellung das Transportfahrzeug aus Fig. 4 auf einer Gitterstruktur des erfindungsgemäßen Lager- und Entnahmesystems sowie einen Arbeitsplatz des Lager- und Entnahmesystems,
- Fig. 6: in einer perspektivischen Darstellung und in einer perspektivischen Schnittdarstellung von schräg oben sowie in einer perspektivischen Darstellung von schräg unten den Arbeitsplatz aus Fig. 5 mit einer Abdeckung in einer geschlossenen Position,
- Fig. 7: in einer perspektivischen Darstellung und in einer perspektivischen Schnittdarstellung von schräg oben sowie in einer perspektivischen Darstellung von schräg unten den Arbeitsplatz aus Fig. 5 mit der Abdeckung in einer geöffneten Position,
- Fig. 8: in einer perspektivischen Schnittdarstellung den Arbeitsplatz aus Fig. 5 in dem erfindungsgemäßen Lager- und Entnahmesystem mit der Abdeckung in der geöffneten Position.

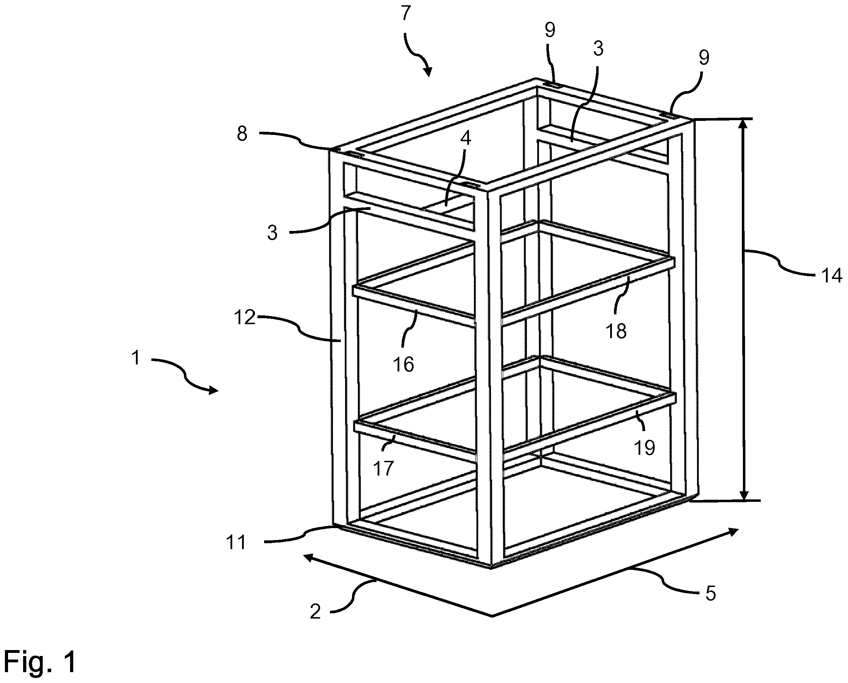

Fig. 1 zeigt in einer perspektivischen Darstellung eine erste Ausführungsform eines Behälters 1 für ein Lager- und Entnahmesystem (in Fig. 1 nicht dargestellt). Der Behälter 1 umfasst sich in Längsrichtung 2 erstreckende Längsstreben 3, zwischen denen ein Träger 4 in Querrichtung 5 verläuft. Der Träger ist als Kleiderstange ausgebildet und eignet sich zum Einhängen von Hängeware (in Fig. 1 nicht dargestellt).

Der Behälter 1 umfasst ein Gestell, welches an seiner Oberseite 7 einen oberen Rahmen 8 aufweist. Der obere Rahmen 8 weist Handhabungsaussparungen 9 für einen Greifer eines Transportfahrzeugs (in Fig. 1 nicht dargestellt) auf. Damit die Behälter 1 gestapelt werden können, weist das Gestell an seiner Unterseite 10 auch einen unteren Rahmen 11 auf. Oberer und unterer Rahmen 8, 11 sind durch vier Vertikalstützträger 12 verbunden, um das Gestell des Behälters 1 zu bilden. Die Höhe 14 des Behälters 1 Höhen entspricht der Länge der verwendeten Vertikalstützträger 12 entsprechen und ist abhängig von der Länge der zu lagernden Hängeware zu wählen.

Die vier seitlichen Öffnungen des Behälters 1 sind durch weitere Längsstreben 16, 17 und Querstreben 18, 19 begrenzt und mithin teilweise verschlossen, so dass eingehängte Hängeware sich beim Transport des Behälters 1 nicht in der Gitterstruktur des Lager- und Entnahmesystems (in Fig. 1 nicht dargestellt) verfangen kann.

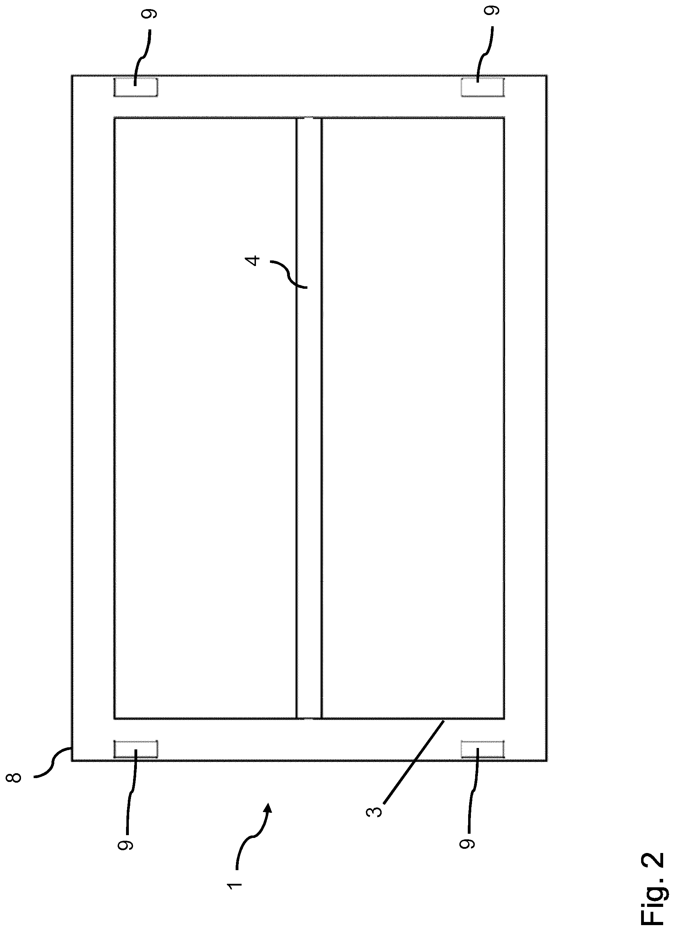

Fig. 2 zeigt den Behälter 1 aus Fig. 1 in einer Draufsicht von oben, also insbesondere den oberen Rahmen 8. Der Träger 4 ist in Längsrichtung 2 etwa mittig angeordnet. Zudem sind die vier Handhabungsaussparungen 9 deutlicher zu erkennen als in Fig. 1.

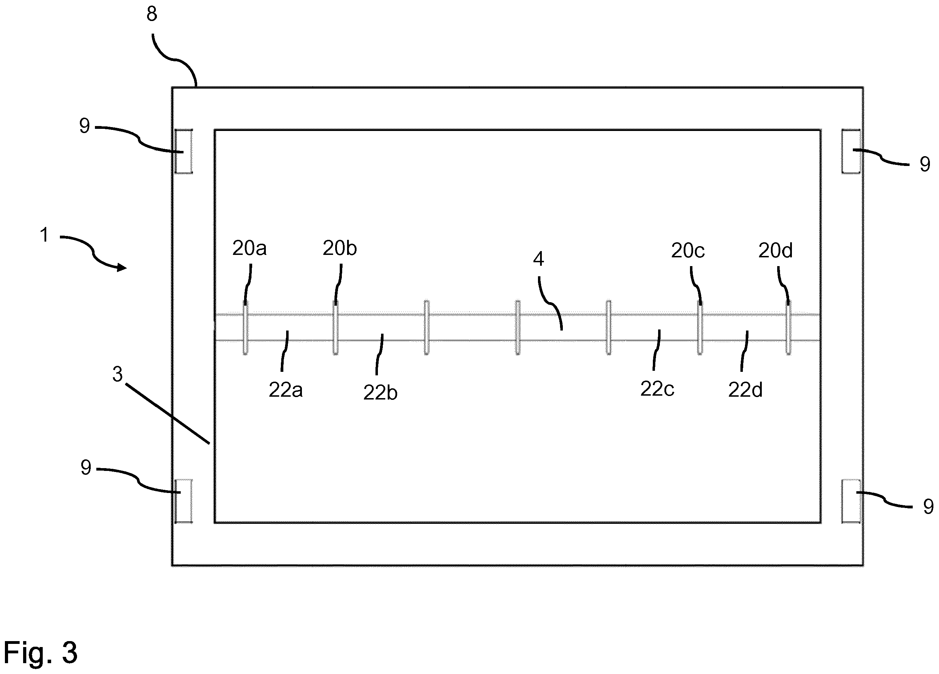

In Fig. 3 ist eine zweite Ausführungsform eines Behälters 1 zu sehen. Diese zweite Ausführungsform unterscheidet sich dadurch von der in Fig.1 und Fig. 2 zu sehenden Ausführungsform, dass Träger 4 in seiner Erstreckungsrichtung - der Querrichtung 5 - bei der zweiten Ausführungsform gemäß Figur 3 Scheiben 20a, 20b, [...] 20c, 20d zur Unterteilung des Trägers 4 in Segmente 22a, 22b, [...] 22c, 22d aufweist. Die Scheiben 20a, 20b, [...] 20c, 20d verhindern im Betrieb ein Verrutschen der Hängeware. Indem die Segmente 22a, 22b, [...] 22c, 22d in etwa gleichmäßig mit Hängeware bestückt werden, wird zudem eine einseitige Beladung des Behälters verhindert.

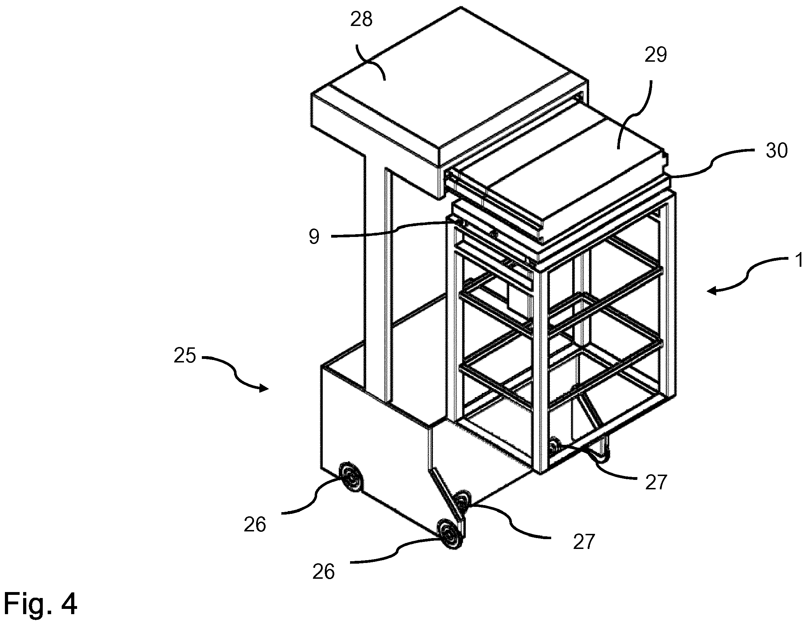

In Fig. 4 ist in einer perspektivischen Darstellung ein Transportfahrzeug 25 für ein erfindungsgemäßes Lager- und Entnahmesystem (in Fig. 1 nicht dargestellt). Zur Fortbewegung auf einer Gitterstruktur des Lager- und Entnahmesystems hat das Transportfahrzeug 25 Räder 26, 27 in Längsrichtung und in Querrichtung. Das Transportfahrzeug hat ein Dach 28 mit einem Ausleger 29. An dem Ausleger 29 ist ein Greifer 30 für Behälter 1 angeordnet. Mit seinem Greifer 30 greift das Transportfahrzeug in die Handhabungsaussparungen 9 des Behälters 1 ein und kann den Behälter so entlang der Gitterstruktur des Lager- und Entnahmesystems transportieren.

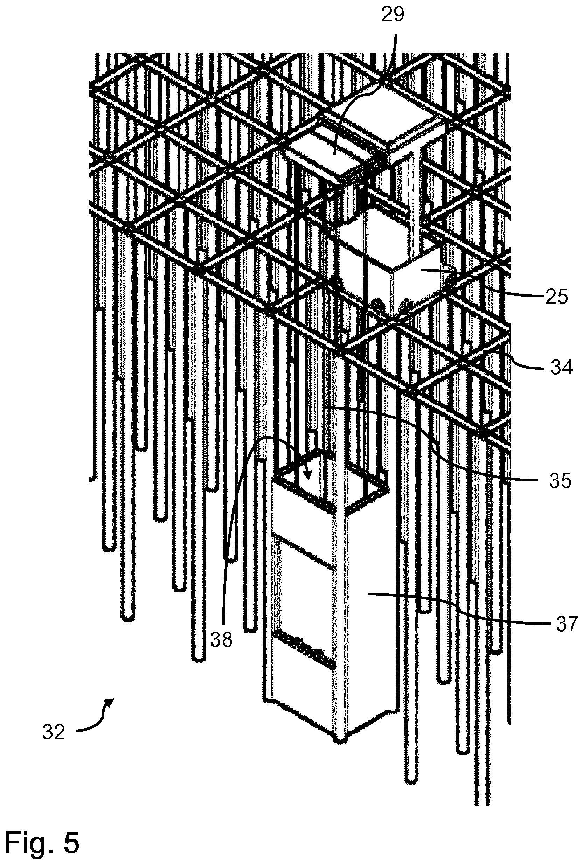

Fig. 5 zeigt in einer perspektivischen Darstellung einen Ausschnitt des Lager- und Entnahmesystems 32. Auf einer Gitterstruktur 34 des Lager- und Entnahmesystems 32 ist das Transportfahrzeug 25 in Längs- und/oder Querrichtung verfahrbar. Der Ausleger 29 ist aus dem Dach des Transportfahrzeugs 25 ausgefahren und hat einen Behälter (in Fig. 5 nicht erkennbar) in die Lagersäule 35 hinabgelassen. Unten in der Lagersäule 35 befindet sich ein Arbeitsplatz 37 für das Lager- und Entnahmesystem 32. An dem Arbeitsplatz 37 kann der in die Lagersäule hinabgelassener Behälter für das Bedienpersonal zugänglich gemacht werden, sofern sich der Behälter in einem Schacht 38 des Arbeitsplatzes 37 in einer Lager- und Entnahmeposition befindet.

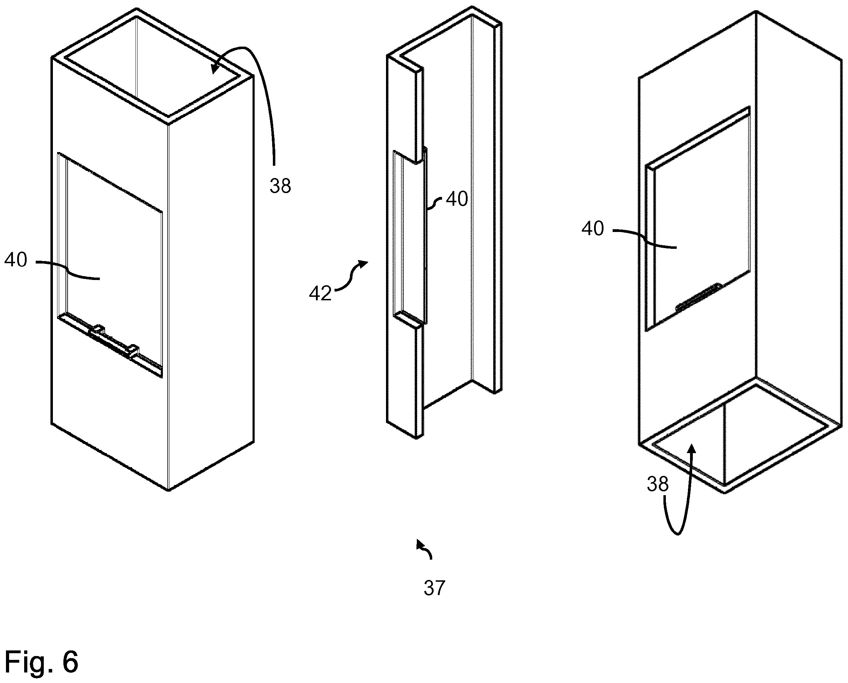

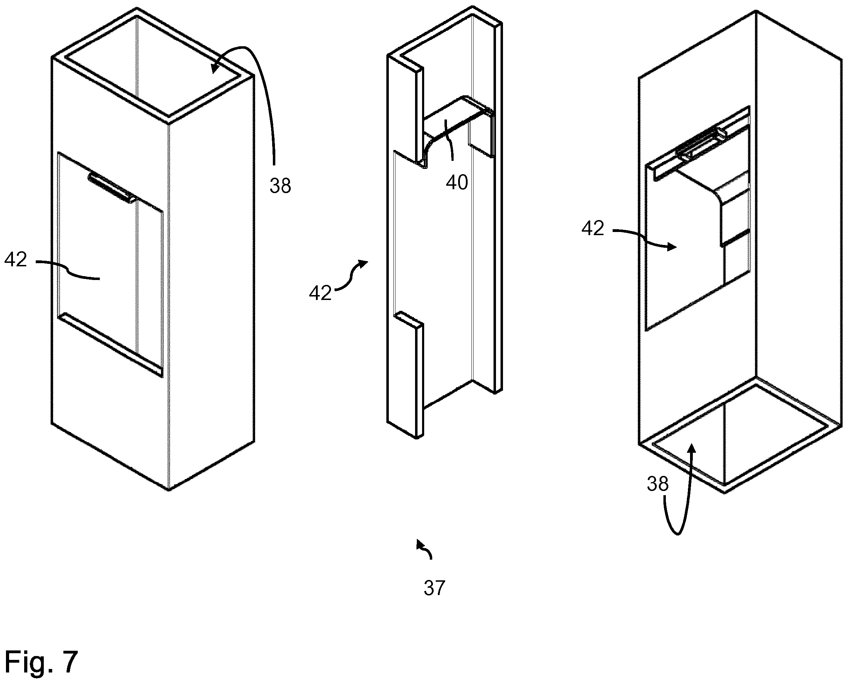

Die Zugänglichmachung des Behälters erfolgt durch eine Abdeckung 40, wie anhand der Fig. 6 und Fig. 7 verdeutlicht wird. Fig. 6 und Fig. 7 zeigen den Arbeitsplatz 37, und zwar links in einer perspektivischen Darstellung von schräg oben, in der Mitte in einer perspektivischen Schnittdarstellung von schräg oben sowie rechts in einer perspektivischen Darstellung von schräg unten.

In Fig. 6 befindet sich die Abdeckung 40 in einer geschlossenen Position, in welcher der Behälter für das Bedienpersonal nicht zugänglich ist. In der geschlossenen Position verläuft die Abdeckung 40 vertikal vor einer Zugangsöffnung 42 zum Schacht 38 im Arbeitsplatz 37. Somit verschließt die Abdeckung 40 die Zugangsöffnung 42.

In Fig. 7 hingegen befindet sich die Abdeckung 40 in einer geöffneten Position, in welcher der Behälter für das Bedienpersonal zugänglich gemacht ist. Die Abdeckung 40 verläuft nicht vertikal vor der Zugangsöffnung 42 für das Bedienpersonal, sondern verläuft teilweise horizontal und verschließt auf diese Weise den Schacht 38 nach oben hin. Insbesondere wird die Abdeckung beim Übergang von der geschlossenen Position in die geöffnete Position in Führungen geführt.

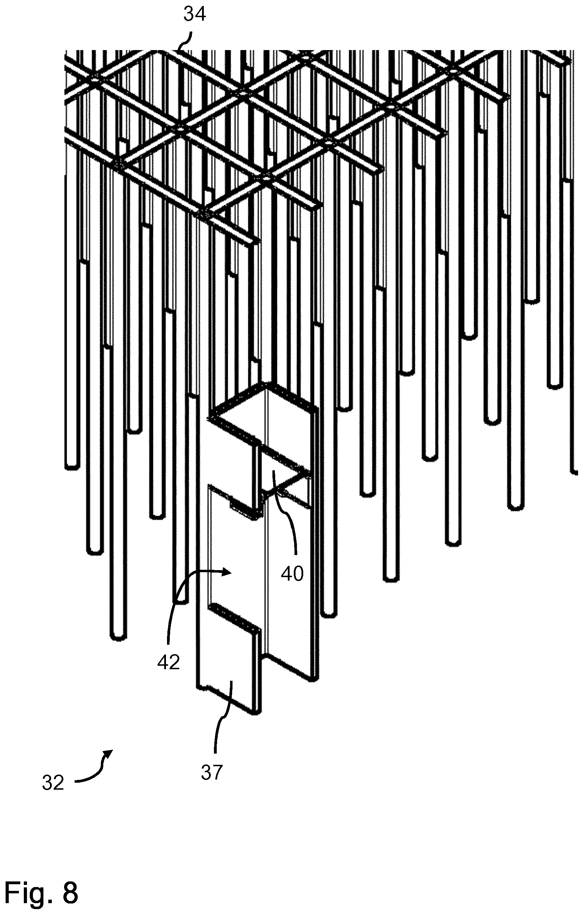

Schließlich ist in Fig. 8 der Arbeitsplatz 37 in einem Ausschnitt des Lager- und Entnahmesystems 32 in einer perspektivischen Schnittdarstellung von schräg oben zu sehen. Die Abdeckung befindet sich in der geöffneten Position und gibt die Zugangsöffnung (42) frei. Dabei verschließt die Abdeckung den Schacht nach oben zum Transportfahrzeug (in Fig. 8 nicht dargestellt) hin.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Behälter
- 2: Längsrichtung
- 3: Längsstreben
- 4: Träger
- 5: Querrichtung
- 7: Oberseite
- 8: Oberer Rahmen
- 9: Handhabungsaussparungen
- 10: Unterseite
- 11: Unterer Rahmen
- 12: Vertikalstützträger
- 14: Höhe
- 16: Längsstrebe
- 17: Längsstrebe
- 18: Querstrebe
- 19: Querstrebe
- 20a, 20b, 20c, 20d: Scheiben
- 22a, 22b, 22c, 22d: Segmente
- 25: Transportfahrzeug
- 26: Räder in Längsrichtung
- 27: Räder in Querrrichtung
- 28: Dach
- 29: Ausleger
- 30: Greifer
- 32: Lager- und Entnahmesystem
- 34: Gitterstruktur
- 35: Lagersäule
- 37: Arbeitsplatz
- 38: Schacht
- 40: Abdeckung
- 42: Zugangsöffnung

## Patentansprüche

1. Lager- und Entnahmesystem (32) für Behälter (1), umfassend:
eine Gitterstruktur (34) mit einer Vielzahl von Gitterzellen, wobei jede Gitterzelle eine Lagersäule (35) einer unterhalb der Gitterstruktur (3) angeordneten Behälter-Lagerstruktur definiert, wobei die Lagersäulen (35) eingerichtet sind, jeweils einen vertikalen Stapel von Behältern (4) aufzunehmen, und wobei die Gitterstruktur (34) Längstransportwege in einer Längsrichtung (2) und Quertransportwege in einer Querrichtung (5) definiert, und
mindestens ein zum Fahren entlang der Längstransportwege und/oder Quertransportwege ausgebildetes Transportfahrzeug (25) für Behälter (1),
**dadurch gekennzeichnet, dass** mindestens ein Behälter (1) mindestens einen Träger (4) zum Einhängen von Hängeware aufweist.

2. Lager- und Entnahmesystem (32) nach Anspruch 1, **dadurch gekennzeichnet, dass** der Träger (4) als vorzugsweise in Segmente (22a, 22b, 22c, 22d) unterteilte Kleiderstange ausgebildet ist.

3. Lager- und Entnahmesystem (32) nach Anspruch 1 oder 2, **dadurch gekennzeichnet, dass** der Behälter (1) Querstreben aufweist, zwischen denen der Träger in Längsrichtung verläuft, und/oder
dass der Behälter Längsstreben (3) aufweist, zwischen denen der Träger (4) in Querrichtung (5) verläuft.

4. Lager- und Entnahmesystem (32) nach einem der Ansprüche 1 bis 3, **dadurch gekennzeichnet, dass** in Abhängigkeit der Abmessungen des Behälters (1) und der zu lagernden Hängeware mehrere Träger (4) über- und/oder nebeneinander in dem Behälter (1) vorgesehen sind.

5. Lager- und Entnahmesystem (32) nach einem der Ansprüche 1 bis 4, **dadurch gekennzeichnet, dass** der Behälter (1) zumindest teilweise verschließbar ausgebildet ist.

6. Arbeitsplatz (37) für ein Lager- und Entnahmesystem (32) nach einem der Ansprüche 1 bis 5 zur Schaffung eines Zugangs zu mindestens einem Behälter.

7. Arbeitsplatz (37) nach Anspruch 6, **dadurch gekennzeichnet, dass** der Arbeitsplatz (37) einen vertikalen Schacht (38) aufweist, wobei ein Behälter (1) mittels eines dem Transportfahrzeug (25) oder der Gitterstruktur (34) zugeordneten Greifers (30) entlang dem Schacht (38) von dem Transportfahrzeug (25) kommend in Richtung einer Zugangsöffnung (42) im Schacht (38) oder entgegengesetzt in Richtung Transportfahrzeug (25) bewegt werden kann und wobei ein im Schacht (38) befindlicher Behälter (1) durch die Zugangsöffnung (42) zugänglich machbar ist.

8. Arbeitsplatz (37) nach Anspruch 7, **dadurch gekennzeichnet, dass** die Zugangsöffnung (42) mit einer Abdeckung (40) verschließbar ist.

9. Arbeitsplatz (37) nach Anspruch 8, **dadurch gekennzeichnet, dass** die Abdeckung (40) in einer geschlossenen Position die Zugangsöffnung (42) verschließt und in einer geöffneten Position die Zugangsöffnung (42) freigibt.

10. Arbeitsplatz (37) nach Anspruch 9, **dadurch gekennzeichnet, dass** die Abdeckung (40) in der geöffneten Position den Schacht (38) zum Transportfahrzeug (25) hin verschließt.

11. Behälter (1) für ein Lager- und Entnahmesystem (32) nach einem der Ansprüche 1 bis 5 mit mindestens einen Träger (4) zum Einhängen von Hängeware.

12. Verfahren zum Betreiben eines Lager- und Entnahmesystems (32) nach einem der Ansprüche 1 bis 5, eines Arbeitsplatzes (37) nach einem der Ansprüche 6 bis 10 und/oder eines Behälters nach Anspruch 11, **dadurch gekennzeichnet, dass** Hängeware in mindestens einen Träger (4) mindestens eines Behälters (1) zur Lagerung eingehängt und/oder zur Entnahme ausgehängt wird.
